# EUROPÄISCHE PATENTSCHRIFT

(11) **EP 4 677 349 B1**
(45) Veröffentlichungstag und Bekanntmachung des Hinweises auf die Patenterteilung: **02.12.2026**
(21) Anmeldenummer: 24711135.4
(22) Anmeldetag: 07.03.2024
(51) Int. Cl.: G01N 25/72

(54) **VERFAHREN UND VORRICHTUNG ZUR THERMOGRAPHISCHEN UND TOPOGRAPHISCHEN CHARAKTERISIERUNG VON INHOMOGENITÄTEN IN DER SCHICHTSTRUKTUR BESCHICHTETER SUBSTRATE**
METHOD AND DEVICE FOR THE THERMOGRAPHIC AND TOPOGRAPHICAL CHARACTERISATION OF INHOMOGENEITIES IN THE LAYER STRUCTURE OF COATED SUBSTRATES
PROCÉDÉ ET DISPOSITIF DE CARACTÉRISATION THERMOGRAPHIQUE ET TOPOGRAPHIQUE D'INHOMOGÉNÉITÉS DANS UNE STRUCTURE DE COUCHES DE SUBSTRATS REVÊTUS

(30) Priorität: 10.03.2023 DE 102023106020
(43) Veröffentlichungstag der Anmeldung: 14.01.2026
(73) Patentinhaber: Orontec GmbH & Co. KG, 44263 Dortmund (DE)
(72) Erfinder: DÖSSEL, Karl-Friedrich, 42107 Wuppertal (DE); WÖRHEIDE, Ralph Jan, 42369 Wuppertal (DE); HUSTERT, Hans Hendrik, 44225 Dortmund (DE)
(74) Vertreter: Rieder & Partner mbB Patentanwälte - Rechtsanwalt
(86) Internationale Anmeldenummer: PCT/EP2024/056042
(87) Internationale Veröffentlichungsnummer: WO 2024/188812

(56) Entgegenhaltungen:
- DE-A1- 102013 104 545
- DE-A1- 102017 003 175
- US-A1- 2019 331 620

## Beschreibung

### Gebiet der Technik

Die Erfindung betrifft ein Verfahren zur thermographischen Charakterisierung der Oberfläche eines beschichteten Metallsubstrats, bei dem von ein oder mehreren ersten Oberflächenabschnitten der Oberfläche ein Thermogramm und von ein oder mehreren beleuchteten zweiten Oberflächenabschnitten der Oberfläche ein Bild erstellt werden, wobei sich zumindest einige der ein oder mehreren ersten und zweiten Oberflächenabschnitte über einen gemeinsamen Bereich der Oberfläche erstrecken.

Die Erfindung betrifft darüber hinaus eine Vorrichtung zur Durchführung des Verfahrens mit einer Thermographieeinrichtung, die einen Energiestrahler und einen Sensor zur Erstellung eines Thermogramms aufweist, mit einer Lichtquelle zur Beleuchtung der Oberfläche des beschichteten Metallsubstrats, mit einer Sensoranordnung zur Aufnahme eines Bildes der beleuchteten Oberfläche und mit einer Einrichtung zum relativen Verlagern des beschichteten Metallsubstrats gegenüber der Sensoranordnung und der Thermographieeinrichtung.

### Stand der Technik

Die DE 10 2017 003 175 A1 beschreibt ein automatisiertes Verfahren und eine Vorrichtung zur Beurteilung von Korrosionsschäden an beschichteten Oberflächen von Metallsubstraten. Die Metallsubstrate werden mit einer Lackschicht versehen. Die Lackschicht wird an definierten Stellen beschädigt. Insbesondere wird der Lackschicht mit einem Ritzwerkzeug eine künstliche Verletzung in Form einer Ritzlinie beigebracht. Das so vorbehandelte Werkstück wird dann für eine vorbestimmte Zeit in eine korrodierende Atmosphäre gebracht, beispielsweise mit Salzwasser besprüht. Während dieser Behandlung bildet sich im Bereich der Verletzung eine Korrosion, die sich im Laufe der Behandlungszeit bis unter die Lackschicht ausbreitet. Dies führt zu Inhomogenitäten in der Struktur der Lackschicht, beispielsweise in Form einer Delamination von Lackschicht und Substrat. In den meisten Fällen ergibt sich hierbei auch eine Aufwölbung der Lackoberfläche, die mit empfindlichen optischen Methoden erkennbar ist. Bei einer bislang ausgeübten standardisierten Methode zur Ermittlung des Ausmaßes dieser Inhomogenitäten wird die Lackschicht mechanisch, beispielsweise mit einer Drahtbürste entfernt. Es werden in Abständen von wenigen Millimetern quer zur Ritzlinie punktuell die Breiten einer sichtbaren Inhomogenität gemessen. Daraus wird dann ein Mittelwert gebildet. In der oben zitierten Schrift wird ein automatisiertes Verfahren angegeben, mit der die Inhomogenitäten in der Schichtstruktur automatisch mithilfe der Impulsthermographie vermessen werden kann. Darüber hinaus wird anhand eines von einer Kamera erzeugten visuellen Bildes der Messbereich für die Impulsthermographie definiert. Um Rückschlüsse über die Art der Korrosion zu gewinnen, werden außerdem die Farbwerte jedes einzelnen Pixels des visuellen Bildes bestimmt und mit dem Thermogramm verglichen, um Inhomogenitäten in der Schichtstruktur, wie beispielsweise Korrosionsschäden zu klassifizieren. In der Praxis wird die Beurteilung von Korrosionsschäden gemäß der Norm EN ISO 6428 - 8 verwendet.

Zum Stand der Technik gehören darüber hinaus Methoden, mit denen berührungsfrei spiegelnde oder zumindest in ausreichender Weise lichtreflektierende Oberflächen erfasst werden können. Hierzu gehören insbesondere die Fotometrie, Radiometrie, Fotogrammetrie, Laserscanning, Reflektometrie, Deflektometrie und die Dunkelfeldbeleuchtung. Mit diesem Verfahren lässt sich ein Höhenprofil einer Oberfläche ermitteln.

### Zusammenfassung der Erfindung

Der Erfindung liegt die Aufgabe zugrunde, das gattungsgemäße Verfahren gebrauchsvorteilhaft weiterzubilden. Die Erfindung soll ergänzende Informationen zur Charakterisierung, insbesondere zu einer topographischen Charakterisierung von Inhomogenitäten in der Schichtstruktur beschichteter Metallsubstrate liefern.

Gelöst wird die Aufgabe durch die in den Ansprüchen angegebene Erfindung. Die Unteransprüche stellen nicht nur vorteilhafte Weiterbildungen der in den nebengeordneten Ansprüchen angegebenen Erfindung, sondern auch eigene Lösungen der Aufgabe dar.

Zunächst und im Wesentlichen wird vorgeschlagen, dass zusätzlich zu der mit dem Thermogramm ermittelten räumlichen Ausdehnung einer Inhomogenität in der Schichtstruktur eines beschichteten Metallsubstrates auch ein Höhenprofil der Oberfläche ermittelt wird. Das erfindungsgemäße Verfahren eignet sich insbesondere zur Analyse von Korrosionsschäden an Lackproben. Hierzu wird ein metallisches Substrat mit einer Lackschicht versehen. Die Lackschicht wird an einer definierten Stelle verletzt. Die so vorbereitete Probe wird für eine vorbestimmte Zeit einer korrodierenden Atmosphäre, beispielsweise Salzwasser ausgesetzt. Die sich dabei bildende, die Lackschicht unterwandernde Korrosion wird mit der Methode der Impulsthermographie untersucht. Mit einem Laserstrahl, wird die Oberfläche an ersten Oberflächenabschnitten für wenige Millisekunden mit einer hohen Leistung erwärmt. Der Wärmeabfluss in das Substrat wird von der zwischen Substratoberfläche und Lackschicht gebildeten Korrosionsschicht beeinflusst. Als Folge dessen lässt sich aus der mit einem Infrarot-Sensor gemessenen Temperatur des ersten Oberflächenabschnitts auf eine unter der Lackschicht liegende Korrosion rückschließen. Der Infrarot-Sensor kann ein "Array" von Pixeln erfassen. Bevorzugt besitzt das "Array" zumindest 8 x 16 Pixel. Bei der Beaufschlagung wird mit einem kontinuierlichen oder schnell gepulsten Laserstrahl kontinuierlich über die Oberfläche gefahren, um simultan mit einer eine Vielzahl von Bildern hintereinander aufnehmenden Infrarotkamera den zeitlichen Verlauf der Temperatur am jeweiligen Belichtungspunkt zu messen. Dieses Verfahren wird erfindungsgemäß ergänzt durch die Aufnahme eines Höhenprofils der Oberfläche. Hierzu wird an zweiten Oberflächenabschnitten jeweils ein Höhenprofil ermittelt. Die zweiten Oberflächenabschnitte enthalten zumindest einige oder mehrere der ersten Oberflächenabschnitte. Das Höhenprofil wird somit auch an einem Bereich der Oberfläche ermittelt, an dem auch die thermographische Untersuchung durchgeführt wird. Das Höhenprofil kann gleichzeitig mit der thermographischen Untersuchung aufgenommen werden. Es kann aber auch vorher oder danach aufgenommen werden. Eine erfindungsgemäße Vorrichtung, die hierzu eine Thermographieeinrichtung aufweist, besitzt eine zusätzliche Sensoranordnung und eine Lichtquelle. Mit der Lichtquelle wird die Oberfläche des beschichteten Metallsubstrats derart beleuchtet, dass mit der zugeordneten zusätzlichen Sensoranordnung das Höhenprofil ermittelbar ist. Mit einer Recheneinrichtung, die insbesondere eine Bilderkennungseinrichtung umfasst, kann das Höhenprofil mit dem Thermogramm in eine räumliche Korrelation gebracht werden. Dabei werden die Höhenwerte des Höhenprofils örtlich den Temperaturwerten des Thermogramms zugeordnet. Das Höhenprofil und das Thermogramm werden an einer Vielzahl von ersten beziehungsweise zweiten Oberflächen aufgenommen, wobei zu einigen, bevorzugt zu allen Oberflächenabschnitten, an denen ein Thermogramm erstellt worden ist, also eine Temperatur gemessen wurde, auch optisch ein Höhenwert der Oberfläche ermittelt wird. Das beschichtete Metallsubstrat kann dabei automatisiert relativ gegenüber einer Messvorrichtung verlagert werden. Die Messvorrichtung weist hierzu bevorzugt den Energiestrahler, der die Temperatur detektierende Sensor, die Lichtquelle und die Sensoranordnung zur Aufnahme eines Bildes der beleuchteten Oberfläche auf. Erfindungsgemäß wird die Art der Beleuchtung so gewählt, dass Aussagen über die Höhe der Inhomogenität, beispielsweise die Aufwölbung einer Lackschicht im Bereich eines Korrosionsschadens. Dazu wird als optisch/visuelles Verfahren insbesondere die Methode der die Deflektometrie PSD (Phase Shifting Deflectommetry), die Lasertriangulation oder aber auch die Dunkelfeldbeleuchtung eingesetzt. Hierzu kann mittels einer Kamera ein visuelles Bild der beschichteten Oberfläche erzeugt werden, wobei die Art der Beleuchtung und die Auswertung des visuellen Bildes der beschichteten Oberfläche die Korrelation des thermischen Bildes mit Farbwerte und einem Höhenprofil ermöglicht. Die Farbwerte können mit einer ein visuelles Bild erfassenden Kamera aufgenommen werden und ermöglichen Rückschlüsse über die Art der Inhomogenität. Beispielsweise kann Rost oder die Bildung von Aluminiumoxid anhand der Farbe erkannt werden. Als Substrat kommt bevorzugt ein lackiertes Metallsubstrat und insbesondere ein eisenhaltiges Substrat in Betracht. Wesentlich für das thermographische Verfahren ist ein Unterschied in der Wärmekapazität und/oder der Wärmeleitfähigkeit zwischen Beschichtung und Substrat, sodass das Verfahren auch auf beschichtete Substrate aus anderen Werkstoffen angewendet werden kann.

### Kurze Beschreibung der Zeichnungen

Ausführungsbeispiele der Erfindung werden nachfolgend anhand beigefügter Zeichnungen erläutert. Es zeigen:

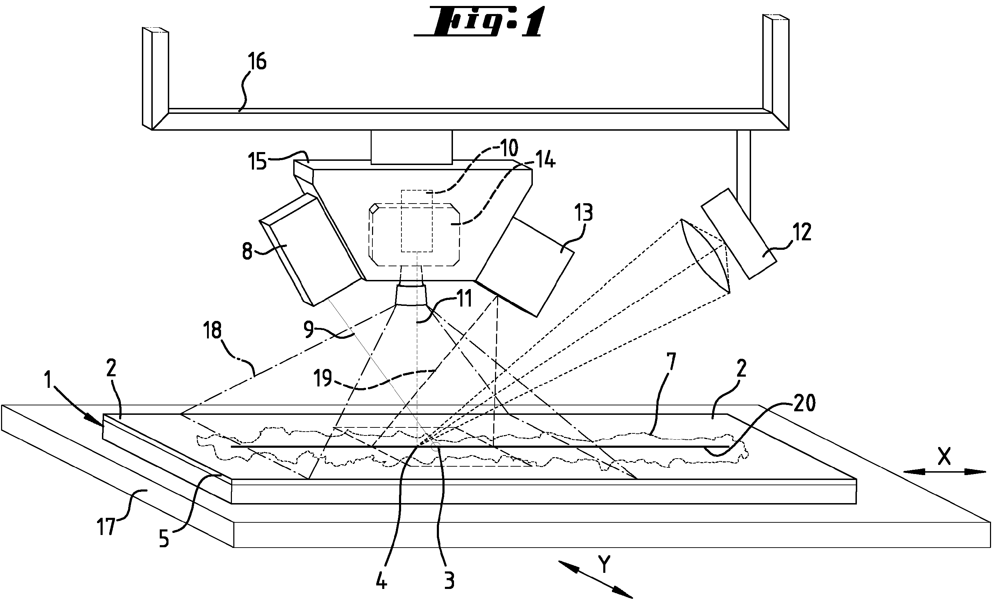

- Fig. 1: schematisch in einer perspektivischen Darstellung ein erstes Ausführungsbeispiel einer Vorrichtung zur Durchführung des Verfahrens, bei dem das Höhenprofil mit Lasertriangulation ermittelt wird,
- Fig. 2: schematisch in einer zweidimensionalen Darstellung ein zweites Ausführungsbeispiel einer Vorrichtung, bei dem das (in den Zeichnungen übervergrößert dargestellte) Höhenprofil ebenfalls mit Lasertriangulation ermittelt wird,
- Fig. 3: eine Darstellung ähnlich der Figur 1 eines dritten Ausführungsbeispiels, bei dem das Höhenprofil mit der Deflektometrie ermittelt wird,
- Fig. 4: eine zweidimensionale Darstellung der in der Figur 3 dargestellten Vorrichtung und
- Fig. 5: eine Darstellung eines vierten Ausführungsbeispiels, bei dem das Höhenprofil mit einer Dunkelfeldbeleuchtung ermittelt wird.

### Beschreibung der Ausführungsformen

An einem Gestell 16, das ortsfest, beispielsweise in einem Labor, angeordnet sein kann, ist ein Träger 15 befestigt, der einen Infrarotlaser 8 trägt, der einen Laserstrahl 9 erzeugt, der an einem ersten Oberflächenabschnitt 3 auf ein Werkstück 1 trifft. Mit einem am Träger 15 befestigten Sensor 13, bei dem es sich um einen Wärmebild-Sensor handeln kann, mit dem ein in einem Erfassungsbereich 19 liegender Abschnitt der Oberfläche 2 des Werkstücks 1 erfasst wird, kann eine Wärmebild dieses Erfassungsbereichs 19 aufgenommen werden. Der Infrarotlaser 8 erzeugt einen Laserstrahl 9 mit einer Wellenlänge, die außerhalb des Empfindlichkeitsbereichs des Sensors 13 liegt, sodass mit dem Sensor 13 die Temperatur des durch die Energiebeaufschlagung erwärmten ersten Oberflächenabschnitts 3 ermittelt werden kann.

Der Wärmeabfluss von der Oberfläche in das Volumen des Werkstücks beeinflusst die Temperatur.

Der Träger 15 besitzt darüber hinaus eine Kamera 14, mit der ein insbesondere auch Farbwerte enthaltendes visuelles Bild der Oberfläche 2 des Werkstücks 1 aufgenommen werden kann. Beim Ausführungsbeispiel ist der Erfassungsbereich 18 der Kamera 14 etwas größer als der Erfassungsbereich 19 des Sensors 13.

Mit einem weiteren Laser 10 wird ein zweiter Oberflächenabschnitt 4 der Oberfläche 2 beaufschlagt. Mit einer weiteren Sensoranordnung 12 kann im Wege der Lasertriangulation die Höhe des Oberflächenabschnittes 4 bestimmt werden.

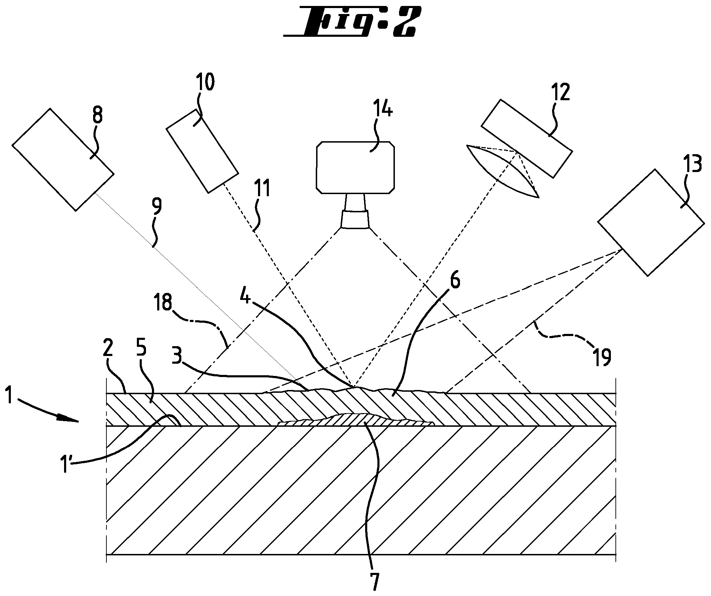

Mit dieser Vorrichtung lässt sich das folgende Verfahren ausführen: Einem zuvor mit einer Lackschicht 5 beschichteten metallischen Werkstück 1 wird eine Beschädigung 20 zugefügt, beispielsweise indem in die Lackschicht 5 eine bis zur Metalloberfläche 1' reichende Ritzlinie eingebracht wird. Das Werkstück 1 wird dann für eine vorbestimmte Zeit in einer Klimakammer einer korrodierenden Umgebung ausgesetzt. Dabei bildet sich im Bereich der Beschädigung 20 ein Korrosionsschaden 7, der auch unter die Lackschicht 5 wandert (siehe Figur 2).

Das so vorbehandelte Werkstück 1 wird auf einen Träger 17 gelegt, der relativ gegenüber dem Gestell 16 von einer nicht dargestellten automatisierten Steuereinrichtung verlagert werden kann. Entsprechend dem in der eingangs genannten DE 10 2017 003 175 A1 beschriebenen Verfahren wird an einer Vielzahl von vorbestimmten ersten Oberflächenabschnitten 3 ein Thermogramm aufgenommen, mit dem Rückschlüsse auf die Delaminierung des Lacks gewonnen werden können. Im Detail wird mit einem Sensor 13, insbesondere einer Wärmebildkamera, untersucht, auf welche Temperatur sich der vom Laserstrahl 9 belichtete erste Oberflächenabschnitt während der Belichtung aufheizt beziehungsweise wie sich die Temperatur nach der Belichtung ändert.

Zeitgleich damit wird an denselben Oberflächenabschnitten oder an anderen Oberflächenabschnitten, die im Folgenden als zweite Oberflächenabschnitte 4 bezeichnet werden, ein Höhenprofil aufgenommen. Es werden Werte ermittelt, die die jeweilige Höhe der Oberfläche der Lackschicht 5 beziehungsweise deren Abstand von der Metalloberfläche 1' angeben. Mit der nicht dargestellten Recheneinrichtung, die eine Bilderkennungseinrichtung aufweisen kann, werden die Messpunkte der Thermographie mit den Messpunkten der Höhenmessung korreliert, sodass zu einigen, bevorzugt zu allen Messorten, an denen mit der Thermographie Temperaturen gemessen worden sind, auch Höhenwerte vorliegen.

Das Werkstück 1 kann dabei in X- und/oder Y-Richtung von Schrittmotoren gegenüber dem Träger 15 verlagert werden. Es ist aber auch möglich, dass der Träger 15 beispielsweise in X-Richtung gegenüber dem Gestell 16 verlagert werden kann und der Träger 17 in Y-Richtung gegenüber dem Gestell 16 verlagert werden kann. Durch eine entsprechende Ansteuerung der Schrittmotoren kann der Laserstrahl 9 zeilenweise über das Werkstück 1 verlagert werden. Einhergehend damit verlagert sich auch der Messpunkt oder die Messstelle der Sensoranordnung 12 über die Oberfläche des Werkstücks 1. Mit dieser Methode lässt sich dann eine Flächenkontur des Korrosionsschadens 7 ermitteln.

Die optische Achse des Laserstrahls 11 kann hier senkrecht zur Oberfläche 2 verlaufen.

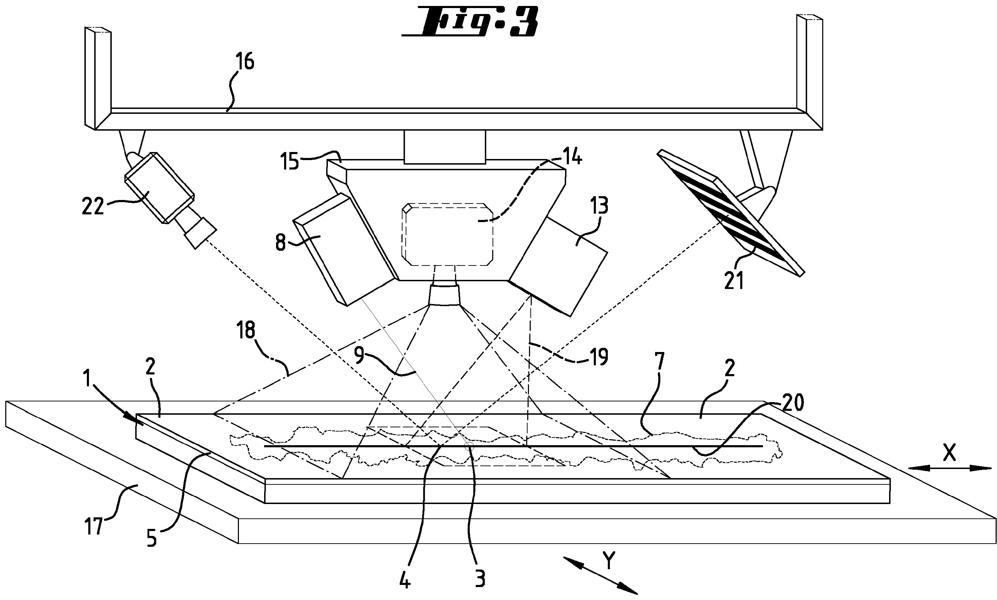

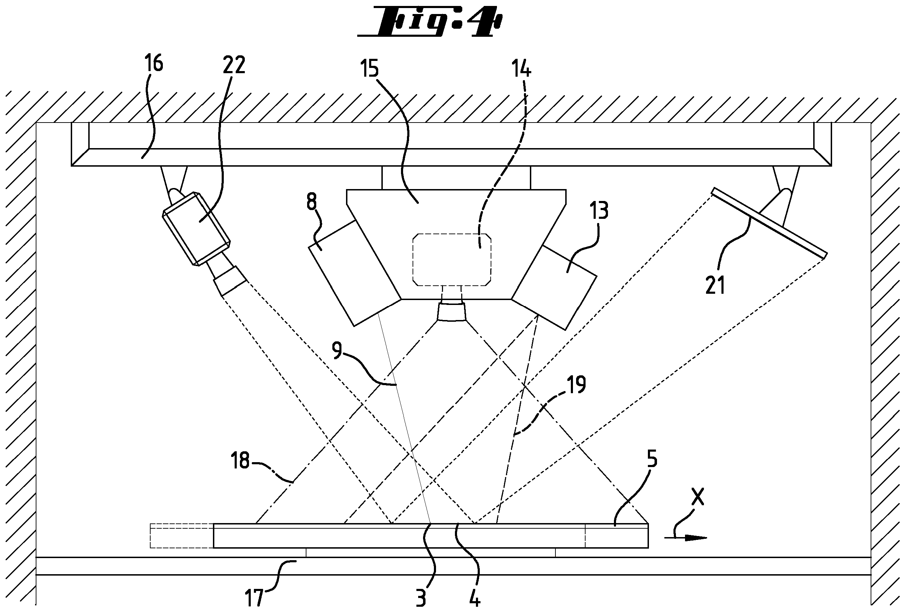

Das in den Figuren 3 und 4 dargestellte Ausführungsbeispiel unterscheidet sich von dem zuvor beschriebenen Ausführungsbeispiel im Wesentlichen durch die Methode der Ermittlung des Höhenprofils. Das Höhenprofil wird hier mit der Methode der Deflektometrie ermittelt. Auf einem Bildschirm wird ein zweidimensionales Bild 21 einer definierten Struktur erzeugt, die sich in einer definierten Weise über den Bildschirm verlagert, sodass mit einer Sensoranordnung, die hier von einer optischen Kamera 22 ausgebildet ist, ein Oberflächenbereich der Oberfläche 1 beobachtet werden kann, an dem sich das bewegliche Bild 21 spiegelt. Bei einer ideal planen Oberfläche würden die über den Bildschirm wandernden Strukturen unverzerrt von der optischen Kamera 22 erfasst werden. Eine von einer idealen Planheit abweichende Oberfläche verzerrt jedoch das von der optischen Kamera 22 aufgenommene Bild und weist dann gegenüber dem beweglichen Bild 21 Verzerrungen auf. Durch eine Vergleichsrechnung mit einer Bilderkennungseinrichtung, bei der das von der Sensoranordnung 22 aufgenommene Bild mit dem zweidimensionalen Bild 21 verglichen wird, können aus dem auf die Verzerrung zurückzuführenden Abweichungen Rückschlüsse auf die Oberflächentopologie der Oberfläche 2 gewonnen werden. Das Höhenprofil kann aus diesen Bildern berechnet werden.

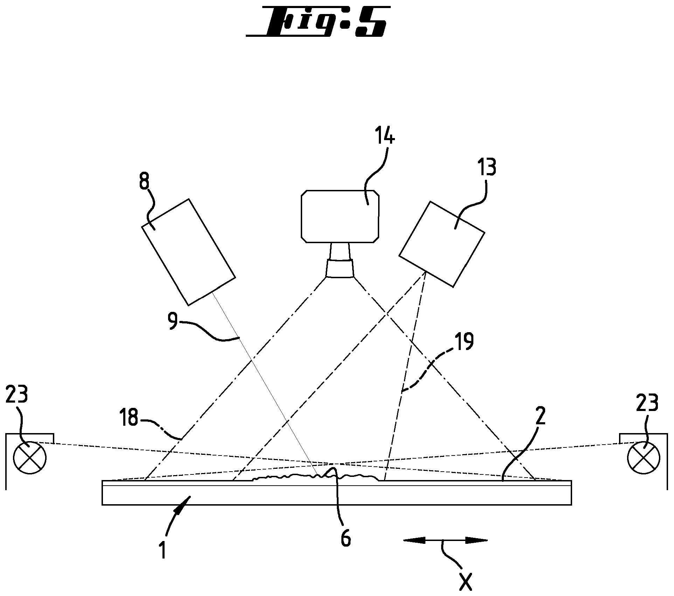

Das in der Figur 5 dargestellte Ausführungsbeispiel unterscheidet sich von den zuvor beschriebenen Ausführungsbeispielen im Wesentlichen durch die Methode der Ermittlung des Höhenprofils. Das Höhenprofil wird hier mit der Dunkelfeldbeleuchtung erzeugt. Mittels der Lichtquellen 23 wird die Oberfläche 2 in einem flachen Winkel belichtet. Mit der Kamera 14 wird ein Bild vom so belichteten Bereich aufgenommen. Mit der Bilderkennungseinrichtung wird das Bild ausgewertet. Das Höhenprofil kann aus dem Bild berechnet werden.

Die optische Achse der Kamera 14 kann hier senkrecht zur Oberfläche 2 verlaufen. Das Höhenprofil kann unter Verwendung von sichtbarem Licht aufgenommen werden. Es ist aber auch möglich, das Höhenprofil mit nicht sichtbarem Licht, beispielsweise infrarotem Licht oder ultraviolettem Licht aufzunehmen.

Bei allen zuvor beschriebenen Ausführungsbeispielen kann darüber hinaus vorgesehen sein, dass visuelle Bilder der Oberfläche 2 aufgenommen werden. Dies kann insbesondere mit der visuellen Kamera 14 erfolgen. Die visuelle Kamera 14 kann empfindlich für sichtbares Licht sein. Sie kann aber auch empfindlich für infrarotes oder ultraviolettes Licht sein. Die dabei aufgenommenen Bilder weisen bevorzugt Farbinformationen auf, sodass die Farbe der Korrosionsschäden 7 analysiert werden kann. Hierdurch lassen sich Rückschlüsse auf die Art der Inhomogenität in der Schichtstruktur schließen.

## Patentansprüche

1. Verfahren zur thermographischen Charakterisierung der Oberfläche (2) eines beschichteten Metallsubstrats (1) unter Verwendung eines Sensors (13), bei dem von einem mit einem Infrarotlaser (8), der einen Laserstrahl (9) erzeugt mit einer Wellenlänge, die außerhalb des Empfindlichkeitsbereichs des Sensors (13) liegt, beleuchteten Bereich der Oberfläche (2) der Beschichtung ein Thermogramm und ein Bild erstellt werden, **dadurch gekennzeichnet, dass** der Bereich derart beleuchtet wird, dass das Bild ein Höhenprofil der Oberfläche liefert.

2. Verfahren nach Anspruch 1, **dadurch gekennzeichnet, dass** das Thermogramm und das Höhenprofil in eine räumliche Korrelation gebracht werden.

3. Verfahren nach einem der vorhergehenden Ansprüche, **dadurch gekennzeichnet, dass** das Höhenprofil mit der Methode der Lasertriangulation, der Dunl<elfeldbeleuchtung oder der Deflektometrie ermittelt wird.

4. Verfahren nach einem der vorhergehenden Ansprüche, **dadurch gekennzeichnet, dass** das Metallsubstrat (1) eine auf seine Oberfläche (1') aufgebrachte Lackschicht (5) aufweist und für eine vorgegebene Zeit derart einer korrodierenden Umgebung ausgesetzt wird, dass sich Imhomogenitäten (6, 7) in der Schichtstruktur ausbilden, wobei die ersten und zweiten Oberflächenabschnitte (3, 4) im Bereich der Inhomogenität (6, 7) liegen, wobei die Inhomogenität insbesondere eine Delamination von Lackschicht (5) und Substrat oder eine anderweitige Beeinträchtigung der Lackschicht (5) ist.

5. Verfahren nach einem der vorhergehenden Ansprüche, **dadurch gekennzeichnet, dass** zumindest von dem Bereich der Oberfläche (2) Farbwerte aufweisende Bilder erzeugt werden, die mit dem Höhenprofil in eine räumliche Korrelation gebracht werden.

6. Vorrichtung zur Durchführung eines Verfahrens gemäß einem der vorhergehenden Ansprüche, mit einer Thermographieeinrichtung (8, 13), die eine Temperiereinrichtung und einen Sensor (13) zur Erstellung eines Thermogramms aufweist, mit einer Lichtquelle (10, 21, 23) zur Beleuchtung zumindest eines Bereichs der Oberfläche (2) des Werkstücks (1), mit einer Sensoranordnung (12, 22, 14) zur Aufnahme eines Bildes des beleuchteten Bereichs der Oberfläche (2) und mit einer Einrichtung (17) zum relativen Verlagern des beschichteten Metallsubstrats (1) gegenüber der Sensoranordnung (12, 22, 14) und der Thermographieeinrichtung (8, 13), wobei die Lichtquelle (10, 21, 23) derart ausgebildet und angeordnet ist, dass das Bild ein Höhenprofil des Bereichs der Oberfläche (2) des beschichteten Metallsubstrats (1) liefert, **dadurch gekennzeichnet, dass** die Temperiereinrichtung ein Infrarotlaser (8) ist, der eingerichtet ist, einen Laserstrahl (9) zu erzeugen, der eine Wellenlänge aufweist, die außerhalb des Empfindlichkeitsbereichs des Sensors (13) liegt, und der bei der Verlagerung des Werkstücks (1) Oberflächenabschnitte des Werkstücks (1) belichtet, wobei der Sensor (13) eingerichtet ist, einen zeitlichen Verlauf der Temperatur am belichteten Oberflächenabschnitt während der Belichtung zu messen.

7. Vorrichtung nach Anspruch 6, **gekennzeichnet durch** eine Bilderkennungseinrichtung, mit der automatisiert das von der Thermographieeinrichtung (8, 13) aufgenommene Thermogramm und das von der Sensoranordnung (12, 22, 14) aufgenommene Bild in eine räumliche Korrelation gebracht wird.

8. Vorrichtung nach einem der Ansprüche 6 oder 7, **dadurch gekennzeichnet, dass** die Lichtquelle ein oder mehrere Laser (10) und die Sensoranordnung ein oder mehrere für das von der Oberfläche reflektierte Licht des Lasers empfindliche Sensoren (12) aufweist oder dass die Lichtquelle (22) ein sich zeitlich veränderndes zweidimensionales Bild liefert und die Sensoranordnung eine das an der Oberfläche reflektierte Bild erfassende Kamera (22) ist oder dass die Lichtquelle (23) in einem flachen Winkel die Oberfläche (2) beleuchtet und die Sensoranordnung (14) eine ein visuelles Bild erfassende Kamera ist.

9. Vorrichtung nach einem der Ansprüche 6 bis 8, **dadurch gekennzeichnet, dass** die Sensoranordnung eine Kamera (14) umfasst, mit der zumindest von dem beleuchteten Bereich der Oberfläche (2) Farbwerte aufweisende Bilder erzeugt werden, und die Bilderkennungseinrichtung derart eingerichtet ist, dass mit ihr die die Farbwerte aufweisenden Bilder in eine räumliche Korrelation mit dem Höhenprofil bringbar sind.

## Claims

1. Method for the thermographic characterization of the surface (2) of a coated metal substrate (1) using a sensor (13), in which a thermogram is generated of the area of the surface (2) of the coating illuminated by a laser beam (9) produced by an infrared laser (8), which generates a laser beam (9) with a wavelength that lies outside the sensitivity range of the sensor (13), a thermogram and an image are generated, **characterized in that** the region is illuminated in such a way that the image provides a height profile of the surface.

2. Method according to claim 1, **characterized in that** the thermogram and the height profile are correlated spatially.

3. Method according to claim 1 or 2, **characterized in that** the height profile is determined using the method of laser triangulation, dark-field illumination, or deflectometry.

4. Method according to any one of the preceding claims, **characterized in that** the metal substrate (1) has a coating layer (5) applied to its surface (1') and is exposed to a corrosive environment for a predetermined time such that inhomogeneities (6, 7) form in the layer structure, wherein the first and second surface sections (3, 4) are located in the region of the inhomogeneity (6, 7), wherein the inhomogeneity is, in particular, delamination of the paint layer (5) from the substrate or some other impairment of the paint layer (5).

5. Method according to any one of the preceding claims, **characterized in that** images exhibiting color values are generated at least from the region of the surface (2), which images are spatially correlated with the height profile.

6. Apparatus for carrying out a method according to any one of the preceding claims, comprising a thermography device (8, 13) having a temperature control device and a sensor (13) for generating a thermogram, a light source (10, 21, 23) for illuminating at least a portion of the surface (2) of the workpiece (1), a sensor array (12, 22, 14) for capturing an image of the illuminated region of the surface (2), and a device (17) for relatively displacing the coated metal substrate (1) with respect to the sensor array (12, 22, 14) and the thermography device (8, 13), wherein the light source (10, 21, 23) is designed and arranged such that the image provides a height profile of the region of the surface (2) of the coated metal substrate (1), **characterized in that** the temperature-control device is an infrared laser (8) that is configured to generate a laser beam (9) having a wavelength that lies outside the sensitivity range of the sensor (13) and that, upon displacement of the workpiece (1), illuminates surface sections of the workpiece (1), wherein the sensor (13) is configured to measure a temporal progression of the temperature at the illuminated surface section during illumination.

7. Apparatus according to claim 6, **characterized by** an image recognition device that automatically establishes a spatial correlation between the thermogram recorded by the thermography system (8, 13) and the image recorded by the sensor array (12, 22, 14).

8. Apparatus according to any one of claims 6 or 7, **characterized in that** the light source comprises one or more lasers (10) and the sensor array comprises one or more sensors (12) sensitive to the laser light reflected from the surface, or **in that** the light source (22) provides a time-varying two-dimensional image and the sensor array is a camera (22) that captures the image reflected from the surface, or that the light source (23) illuminates the surface (2) at a shallow angle and the sensor array (14) is a camera that captures a visual image.

9. Apparatus according to any one of claims 6 to 8, **characterized in that** the sensor assembly comprises a camera (14) used to generate images containing color values at least of the illuminated area of the surface (2), and the image recognition device is configured such that the images containing the color values can be correlated spatially with the elevation profile.

## Revendications

1. Procédé de caractérisation thermographique de la surface (2) d'un substrat métallique revêtu (1) à l'aide d'un capteur (13), dans lequel on réalise un thermogramme de la zone de la surface (2) du revêtement éclairée par un faisceau laser (9) généré par un laser infrarouge (8), qui génère un faisceau laser (9) dont la longueur d'onde se situe en dehors de la plage de sensibilité du capteur (13), ce qui permet d'obtenir un thermogramme et une image de la zone de la surface (2) du revêtement, **caractérisé en ce que** la zone est éclairée de telle sorte que l'image fournisse un profil en hauteur de la surface.

2. Procédé selon la revendication 1, **caractérisé en ce que** le thermogramme et le profil altimétrique sont mis en corrélation spatiale.

3. Procédé selon l'une des revendications précédentes, **caractérisé en ce que** le profil altimétrique est déterminé à l'aide de la méthode de triangulation laser, de l'éclairage en champ sombre ou de la déflectométrie.

4. Procédé selon l'une des revendications précédentes, **caractérisé en ce que** le substrat métallique (1) comporte une couche de peinture (5) appliquée sur sa surface (1') et est exposé pendant un temps prédéfini à un environnement corrosif de telle sorte que des hétérogénéités (6, 7) se forment dans la structure de la couche, les première et deuxième parties de surface (3, 4) se situent dans la zone de l'inhomogénéité (6, 7), l'inhomogénéité étant notamment une délamination de la couche de peinture (5) et du substrat ou une autre altération de la couche de peinture (5).

5. Procédé selon l'une des revendications précédentes, **caractérisé en ce que** des images présentant des valeurs chromatiques sont générées au moins à partir de la zone de la surface (2), lesquelles sont mises en corrélation spatiale avec le profil en hauteur.

6. Dispositif destiné à la mise en œuvre d'un procédé selon l'une des revendications précédentes, comprenant un dispositif thermographique (8, 13) qui comporte un dispositif de régulation de température et un capteur (13) pour établir un thermogramme, une source lumineuse (10, 21, 23) pour éclairer au moins une zone de la surface (2) de la pièce (1), d'un ensemble de capteurs (12, 22, 14) destiné à enregistrer une image de la zone éclairée de la surface (2), et d'un dispositif (17) destiné à déplacer le substrat métallique revêtu (1) par rapport à l'ensemble de capteurs (12, 22, 14) et du dispositif thermographique (8, 13), la source lumineuse (10, 21, 23) étant conçue et disposée de telle sorte que l'image fournisse un profil en hauteur de la zone de la surface (2) du substrat métallique revêtu (1), **caractérisé en ce que** le dispositif de régulation de température est un laser infrarouge (8) qui est agencé pour générer un faisceau laser (9) présentant une longueur d'onde située en dehors de la plage de sensibilité du capteur (13) et qui, lors du déplacement de la pièce (1), il éclaire des sections de surface de la pièce (1), le capteur (13) étant agencé pour mesurer l'évolution temporelle de la température au niveau de la section de surface éclairée pendant l'exposition.

7. Dispositif selon la revendication 6, **caractérisé par** un dispositif de reconnaissance d'images permettant d'établir automatiquement une corrélation spatiale entre le thermogramme enregistré par le dispositif de thermographie (8, 13) et l'image enregistrée par le système de capteurs (12, 22, 14).

8. Dispositif selon l'une des revendications 6 ou 7, **caractérisé en ce que** la source lumineuse comprend un ou plusieurs lasers (10) et le réseau de capteurs comprend un ou plusieurs capteurs (12) sensibles à la lumière du laser réfléchie par la surface, ou **en ce que** la source lumineuse (22) fournit une image bidimensionnelle variant dans le temps et que le réseau de capteurs est une caméra (22) captant l'image réfléchie par la surface, ou **en ce que** la source lumineuse (23) éclaire la surface (2) selon un angle plat et que le réseau de capteurs (14) est une caméra captant une image visuelle.

9. Dispositif selon l'une des revendications 6 à 8, **caractérisé en ce que** le système de capteurs comprend une caméra (14) permettant de générer des images présentant des valeurs chromatiques, au moins à partir de la zone éclairée de la surface (2), et **en ce que** le dispositif de reconnaissance d'images est agencé de telle sorte qu'il permette d'établir une corrélation spatiale entre les images présentant les valeurs chromatiques et le profil altimétrique.
